# FASCICULE DE BREVET EUROPEEN

(11) **EP 2 598 398 B1**
(45) Date de publication et mention de la délivrance du brevet: **18.10.2017**
(21) Numéro de dépôt: 11752294.6
(22) Date de dépôt: 26.07.2011
(51) Int. Cl.: B64C 1/20, B64D 43/00, H05K 7/18

(54) **PROCÉDÉ ET DISPOSITIF D'AMÉNAGEMENT D'UNE SOUTE AVIONIQUE EN POINTE-AVANT D'UN AÉRONEF**
AVIONIKINSTALLATION IM BUGBEREICH EINES FLUGZEUGS SOWIE ZUGEHÖRIGES INSTALLATIONSVERFAHREN
ARRANGEMENT OF AN AVIONIC BAY IN THE NOSE SECTION OF AN AIRCRAFT FUSELAGE AND ASSOCIATED INSTALLATION METHOD

(30) Priorité: 27.07.2010 FR 1056141
(43) Date de publication de la demande: 05.06.2013
(73) Titulaire: Airbus Operations SAS, 31060 Toulouse (FR)
(72) Inventeur: BURGUNDER, Samuel, 31200 Toulouse (FR); GUERING, Bernard, 31850 Montrabe (FR)
(74) Mandataire: Gicquel, Olivier Yves Gérard
(86) Numéro de dépôt international: PCT/FR2011/051795
(87) Numéro de publication internationale: WO 2012/022891

(56) Documents cités:
- FR-A1- 2 933 377
- US-A- 4 153 225
- US-A1- 2006 108 477

## Description

L'invention appartient au domaine de l'installation des systèmes dans les aéronefs. Plus particulièrement l'invention concerne l'installation des meubles avioniques, des coeurs électriques et des baies IFE.

Les avions commerciaux, plus particulièrement les gros-porteurs, comprennent de plus en plus de systèmes électriques et électroniques destinés soit au contrôle et au pilotage de l'aéronef, sous forme de calculateurs et d'organes de commande ou de puissance électriques, soit au confort des passagers comme des dispositifs multimédias, désignés couramment par IFE ou « In Flight Entertainment ». Ces systèmes sont le plus souvent localisés dans la partie avant de l'aéronef à proximité du poste de pilotage, généralement en partie basse du fuselage, sous le plancher accueillant les passagers et le poste de pilotage, dans une soute dite « soute avionique ».

Les systèmes indispensables au pilotage sont redondants de manière à ce qu'une panne ne puisse pas affecter la capacité de pilotage de l'aéronef. À cette fin de sécurité, ces systèmes doivent également faire l'objet d'une ségrégation électrique et mécanique, entre les systèmes principaux et de secours, de sorte qu'un événement électrique, tel qu'une surtension, ou mécanique, tel que la pénétration d'un projectile dans le fuselage, ne puissent à la fois affecter les systèmes principaux et les systèmes de secours.

L'installation de ces systèmes comprend des armoires, ou meubles systèmes, de forme parallélépipédique, contenant des calculateurs, des composants électriques et électroniques généralement en rack, ainsi que des faisceaux de câbles électriques, ou harnais, reliant ces armoires entre elles, avec les organes de commande du poste de pilotage ou les terminaux IFE de la cabine. Elle comprend aussi des dispositifs de refroidissement et de ventilation des armoires. Il est nécessaire que ces différents meubles soient accessibles soit depuis l'intérieur soit depuis l'extérieur de l'aéronef pour y effectuer des opérations de maintenance, de contrôle, de remplacement ou de réparation des composants.

Selon l'art antérieur ces différents systèmes ne sont pas installés dans une zone autour de la case de train avant, ceci pour au moins deux raisons :
- Cette zone est potentiellement soumise à des projections soit par le roulage sur des objets soit par l'éclatement d'un pneu, en roulage ou en vol ;
- la zone est très encombrée par des pièces structurales telles que des bielles qui limitent les possibilités d'implantation de meubles systèmes encombrants dans cette zone en conservant l'accessibilité à ceux-ci.

Ainsi, face à la multiplication des systèmes, la nécessité d'accroître le volume disponible en soute avionique se traduit par un élargissement de la pointe-avant à l'arrière de la case de train. Cet élargissement conduit à une augmentation de la traînée aérodynamique de l'aéronef et de sa masse. De telles conséquences ont un impact direct sur la consommation en carburant et donc sur le coût d'exploitation et les performances dudit aéronef.

Le document US 4,153,225 divulgue un aéronef comprenant un meuble système comprenant une structure qui est fixée dans la structure de l'aéronef sur des cadres et qui est connectée aux traverses de la structure de l'aéronef par un assemblage de type glissière, qui empêche les mouvements horizontaux mais, en même temps, permet les mouvements verticaux entre la structure et les traverses.

L'invention vise une installation compacte des systèmes, particulièrement en pointe-avant, de sorte à réduire le volume de cette partie de l'avion et en réduire à la fois la masse et la traînée aérodynamique, tout en conservant un accès facile aux différents composants systèmes pour des opérations de contrôle, de réparation, de remplacement ou de maintenance. Dans la suite on désigne sous le terme général de « meuble système » un meuble avionique, un coeur électrique ou une baie IFE. Pour répondre à ce besoin, l'invention propose un aéronef selon la revendication 1. Le pas de répartition des traverses dans le fuselage peut être constant ou variable selon la zone de fuselage considérée.

L'intégration des fonctions structurales dans le meuble permet de dégager de la place, qui, selon les réalisations de l'art antérieur, était occupée par des éléments structuraux tels que des bielles qui ont pour fonction de drainer les flux d'effort entre la structure du plancher de l'aéronef et la structure de coque du fuselage. Ces bielles, selon l'art antérieur, étaient montées en soute à proximité des extrémités des traverses plancher de sorte à laisser de l'espace au centre du fuselage afin d'y installer différents éléments. En conséquence l'espace situé près des extrémités n'était pas accessible du fait de la présence de ces bielles.

Ainsi, le meuble système est installé de sorte à drainer les flux d'effort entre les traverses plancher et la structure coque du fuselage L'intégration de liens structuraux dans les meubles systèmes permet ainsi de répartir ces appuis sur la longueur des traverses plancher et de réduire la section desdites traverses à capacité de chargement égale en regard des solutions de l'art antérieur.

L'invention peut être mise en oeuvre selon des modes de réalisation avantageux, exposés ci-après, lesquels peuvent être considérés individuellement ou selon toute combinaison techniquement opérante.

Selon un mode de réalisation avantageux un tel meuble système comprend au moins 2 liens structuraux entre les traverses et la structure de coque. Cette répartition des appuis permet de réduire de la section des traverses à performance structurale équivalente à celle de l'art antérieur.

Avantageusement le meuble système est adapté à un fuselage comprenant des traverses distribuées selon un pas longitudinal et la largeur du meuble est un multiple du pas longitudinal de répartition des traverses dans la zone de fuselage où il est installé. Cette configuration permet d'optimiser à la fois le volume disponible à l'intérieur des meubles structuraux, l'espace d'accès transversal entre ces meubles et la répartition des liens structuraux.

Avantageusement, la liaison de la ferrure et de la traverse est réalisée par l'intermédiaire d'une contre plaque prenant appui sur la face opposée de la face d'appui de la ferrure sur la traverse une cale d'épaisseur ajustable étant insérée entre ladite contre-plaque et la traverse. Cette caractéristique permet d'assurer la liaison effective de tous les liens structuraux du meuble avec la structure de l'aéronef par un réglage aisé. De la qualité de cette liaison dépend le drainage effectif des efforts appliqués au plancher vers la structure de coque de l'aéronef.

Avantageusement, la structure dudit meuble comprend des bielles aptes à drainer des efforts selon la direction transversale entre le meuble et les traverses. Ainsi, les dites bielles permettent de stabiliser transversalement le meuble système tout en répartissant la reprise des efforts transversaux appliqués au meuble système sur la longueur des traverses. Le procédé pour l'aménagement d'une soute avionique dans la pointe-avant d'un aéronef comprenant un fuselage formant une structure de coque et un plancher posé sur des traverses lesquelles s'étendent transversalement dans ladite structure de coque comprend des étapes consistant à :
a. installer transversalement des meubles systèmes selon l'un des modes de réalisation exposé ci-avant en laissant entre deux meubles se succédant longitudinalement une distance au moins égale à la distance comprise entre deux traverses successives ;
b. Installer des harnais de connexion dudit meuble selon un cheminement déterminé dans ladite soute avionique.

Par « installer » on entend :
- placer et orienter le meuble système ou les harnais dans la structure de l'aéronef ;
- fixer par des organes de fixation appropriés le meuble système ou les harnais à la structure de l'aéronef ;
- connecter le meuble ou les harnais au réseau de commande, de puissance ou de diffusion multimédia (IFE) de l'aéronef ; et
- connecter audit meuble tous les systèmes de refroidissement, de ventilation de supervision et de sécurité.

Par « installer transversalement », on entend, installer ledit meuble alors que celui-ci est orienté dans la structure de sorte que sa plus grande longueur soit parallèle aux traverses plancher.

La distance entre les traverses étant généralement suffisante pour le passage d'une personne, il est avantageux de procéder à l'aménagement d'une soute avionique de pointe-avant d'aéronef en disposant transversalement des meubles système, chaque meuble étant distant du suivant d'une distance au moins égale à la distance intertraverse. Cet aménagement autorise ainsi une compacité maximale de l'installation des meubles systèmes dans la soute avionique tout en préservant des accès latéraux, du fait de l'absence de bielle, ainsi qu'entre les meubles systèmes.

Ce procédé est avantageusement mis en oeuvre pour l'aménagement d'une soute avionique dans un fuselage comprenant des traverses réparties selon un pas longitudinal, dans ce cas, à l'étape a), les meubles systèmes sont installés transversalement et distants d'un pas longitudinal de répartition des traverses.

Avantageusement le procédé comprend une étape consistant à distribuer selon l'axe longitudinal de l'aéronef les meubles systèmes selon un premier groupe comprenant les meubles systèmes principaux et un second groupe comprenant les meubles systèmes de secours. Cette disposition permet une ségrégation physique des systèmes principaux et des systèmes de secours, telle qu'en cas d'événement de type choc ou introduction de projectile dans la soute avionique, seul l'un des deux groupes peut être endommagé, ledit groupe endommagé servant également de protection à l'autre groupe. De tels événements peuvent se produire en cas d'explosion en soute, par l'impact d'un projectile au niveau du nez ou lors de l'éclatement d'un pneu du train d'atterrissage.

Préférentiellement, le groupe de meubles systèmes de secours est installé sous le poste de pilotage de l'aéronef. Le poste de pilotage étant une zone sécurisée cet aménagement permet de regrouper toutes les composantes liées à la sécurité du pilotage dans une même zone, ladite zone bénéficiant d'une protection renforcée. Une telle protection renforcée étant réalisée au détriment de la masse de l'appareil, il est toujours avantageux de regrouper ces zones sécurisées afin d'en limiter l'impact sur la masse. Cela permet également de rapprocher les liaisons joignant le poste de pilotage aux calculateurs et aux coeurs électriques, et, en réduisant ainsi la longueur des harnais correspondant à ces connexions, d'en réduire la masse. Le procédé peut avantageusement comprendre une étape consistant à positionner au moins un groupe de meubles systèmes en dehors des trajectoires suivies par les débris lors de l'éclatement d'un pneu du train d'atterrissage avant de l'aéronef.

Les différentes liaisons entre le poste de pilotage et les calculateurs principaux ou de secours ainsi que les coeurs électriques sont réalisées par des faisceaux de câbles dénommés couramment « harnais ». La fonction structurale des meubles systèmes permet, en répartissant mieux les appuis sur la longueur des traverses, d'utiliser des traverses de section moindre. On ménage ainsi un espace suffisant entre le plancher et les traverses pour y laisser passer lesdits harnais. Aussi, selon un mode de réalisation particulièrement avantageux, le procédé d'aménagement de la soute avionique est tel qu'à l'étape b, une partie au moins du cheminement des harnais est comprise entre les traverses et le plancher. Ainsi le cheminement des harnais est simplifié et leur encombrement dans la soute avionique nettement réduit.

L'invention concerne également un aéronef équipé d'une soute avionique conçue et aménagée selon l'un des modes de réalisation du procédé d'aménagement de la soute avionique. Ce mode de réalisation de la soute avionique permet de réaliser une pointe-avant plus fine présentant une surface mouillée moins importante tout en améliorant l'accessibilité des systèmes dans ladite soute avionique.

Avantageusement, ledit aéronef comprend un train d'atterrissage avant rétractable dans une case de train placée dans la pointe-avant caractérisé en ce qu'il comprend au moins un meuble système à proximité immédiate de ladite case de train. Ainsi, tout l'espace compris dans la pointe avant est utilisé.

Avantageusement, au moins un des meubles systèmes de l'aéronef selon ce mode de réalisation précédent, se trouve à proximité immédiate de la case de train en zone non pressurisée. Ainsi, l'espace périphérique de la case de train peut être utilisé pour l'installation de meubles systèmes non critique, en libérant ainsi de l'espace dans la zone pressurisée de la soute avionique.

L'invention sera maintenant plus précisément décrite dans le cadre de modes de réalisation préférés, nullement limitatifs, représentés sur les figures 1 à 12, dans lesquelles :
- la figure 1, relative à l'art antérieur représente un fuselage d'aéronef en coupe transversale selon une vue de face (figure 1A), une vue en perspective de face (figure 1B) et selon un détail en vue de face (figure 1C) ;
- la figure 2, également relative à l'art antérieur, montre une partie de pointe-avant d'aéronef en coupe longitudinale et de profil ;
- la figure 3 illustre en coupe longitudinale et de profil une partie de pointe-avant d'aéronef comprenant un aménagement de soute avionique selon l'invention, avec une comparaison du profil de la dite pointe-avant réalisée selon l'art antérieur ;
- la figure 4A relative à l'art antérieur montre schématiquement en coupe transversale et de face un aménagement des systèmes et des meubles systèmes ;
- la figure 4B illustre selon la même vue que la figure 4A un aménagement des systèmes selon un mode de réalisation de l'invention ;
- la figure 5, illustre en coupe longitudinale et selon une vue de profil un aménagement de soute avionique dans la pointe-avant d'un aéronef selon un exemple de réalisation de l'invention ;
- la figure 6 présente la même pointe-avant que la figure 5 vue cette fois-ci en coupe longitudinale en perspective vue de l'arrière ;
- la figure 7 représente selon la même vue que la figure 5 une pointe-avant aménagée selon un exemple de réalisation de l'invention et met en évidence les trajectoires du train d'atterrissage et des éventuelles projections susceptibles d'intervenir dans cette zone de l'aéronef ;
- la figure 8 représente en perspective et de face une pointe-avant d'un aéronef comprenant une baie IFE placée sur les flancs de la case de train ;
- la figure 9 illustre un exemple d'installation d'un meuble système dans le fuselage d'un aéronef, en perspective vue de face (figure 9A) et de profil (figure 9B) ; et
- les figures 10 à 12, présentent des détails d'un exemple de fixations adaptées à l'installation d'un meuble système selon l'invention dans le fuselage d'un aéronef.

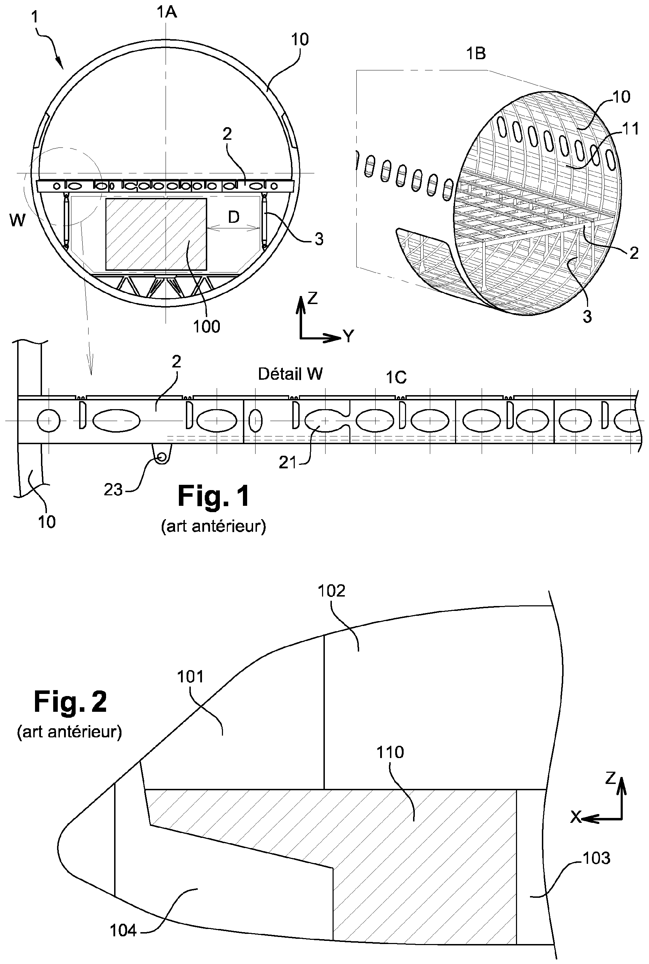

La figure 1 représente une section de fuselage (1) selon l'art antérieur. La structure du fuselage, que ce soit en section courante ou en pointe-avant comprend une peau (11) métallique ou composite, des raidisseurs circonférentiels dénommés cadres (10), disposés à intervalles réguliers selon l'axe longitudinal (X) du fuselage définissant une structure de coque de forme sensiblement tubulaire. Un tel fuselage comprend également des traverses (2) disposées transversalement et régulièrement réparties selon l'axe longitudinal du fuselage. Ces traverses sont destinées à soutenir le plancher. Elles sont liées aux cadres à chacune leurs extrémités, et sont également soutenues et liées à la partie inférieure du fuselage par l'intermédiaire de bielles (3). Ces bielles sont généralement liées aux traverses (2) par l'intermédiaire d'une liaison pivot reprise sur un tenon (23). Elles assurent le drainage des efforts entre le plancher et la structure de coque. Les traverses sont ajourées par des ouvertures (21) afin de les alléger mais également pour y autoriser le passage de cheminements de réseaux tels que des harnais électriques (40).

Selon une section de fuselage perpendiculaire à l'axe longitudinal de celui-ci, le volume intérieur permettant d'installer des meubles systèmes (100) doit autoriser des passages (D) pour permettre l'accès à ces meubles pour des opérations de maintenance.

Ces meubles systèmes (130) sont situés en zone pressurisée.

La figure 2 montre, toujours selon l'art antérieur, un exemple de volume disponible en pointe-avant pour la soute avionique (110) compte tenu du volume pris par la case de train (104). Ce volume disponible (110) se situe entre le poste de pilotage (101), la case de train avant (104) l'espace cabine (102) et la fin de l'espace de soute cargo (103). En conséquence le seul moyen d'augmenter ce volume est de l'étendre vers la soute cargo (103) ce qui est désavantageux par rapport au volume de fret transportable par l'avion, ou encore d'augmenter le diamètre de la pointe-avant, ce qui a une influence négative directe sur la traînée aérodynamique de l'appareil.

Dans son principe général, l'invention consiste à déplacer au moins une partie des meubles systèmes vers l'avant de l'aéronef en tirant avantage de l'espace disponible dans la zone autour de la case de train. Selon l'art antérieur et les connaissances générales de l'homme du métier, cette zone est laissée libre de tout meuble système, particulièrement si ledit meuble comprend des organes de commandes ou de puissance indispensables au pilotage de l'aéronef car cette zone est particulièrement exposée à des projections diverses susceptibles d'endommager lesdits systèmes.

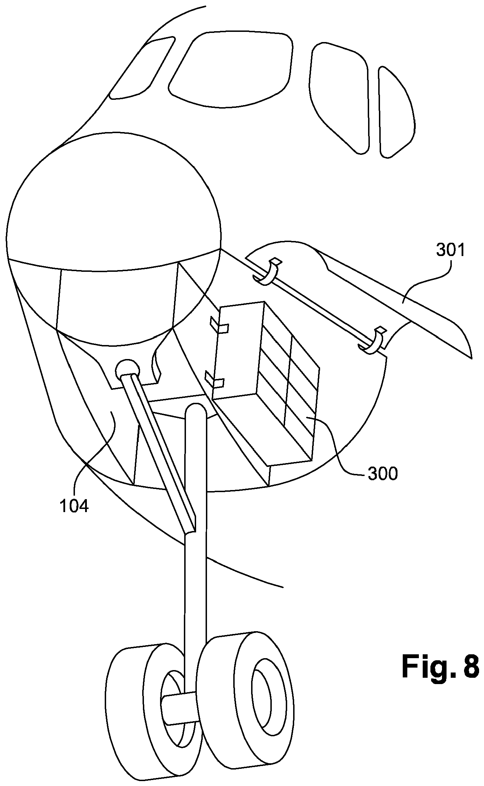

Figure 8, selon un premier mode de réalisation, des meubles systèmes (300) dont le fonctionnement n'est pas critique pour le pilotage de l'aéronef, tels que des baies IFE, peuvent être placées en zone non pressurisée, fixée directement sur les flancs de la case de train (104). Une trappe (301) permet d'accéder par l'extérieur à ces baies IFE, qui, n'étant pas indispensables au fonctionnement de l'aéronef, ne nécessitent qu'une protection minimale vis-à-vis des impacts avec des corps étrangers.

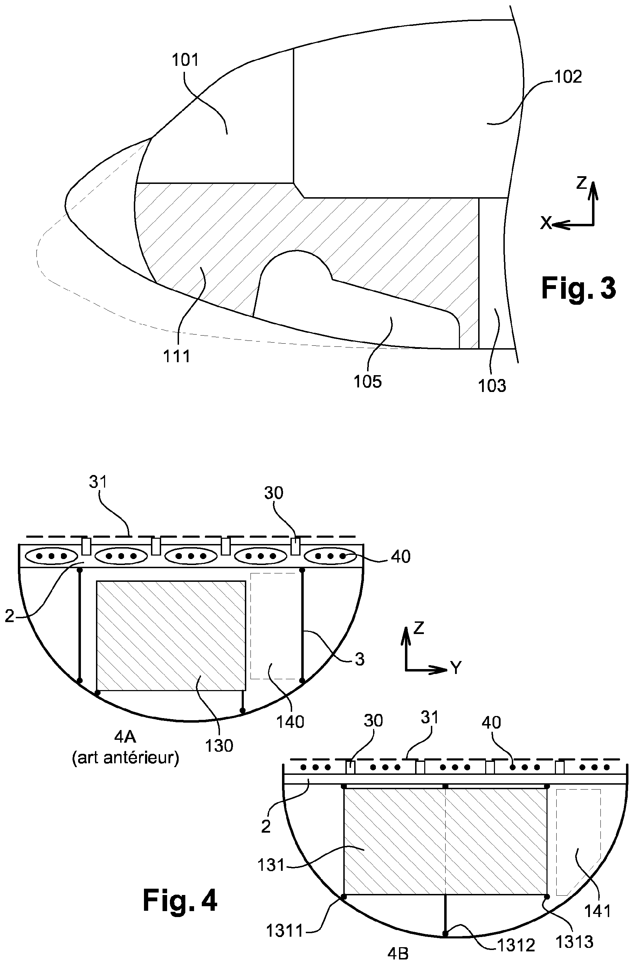

Figure 3, pour aller plus loin il est cependant nécessaire d'utiliser tout l'espace disponible autour de la case de train, à cette fin l'invention propose d'utiliser des meubles systèmes intégrant des fonctions structurales et un aménagement particulier de la soute avionique permettant une sécurité accrue des systèmes en cas d'intrusion d'une projection dans ladite soute.

Figure 3, l'invention sera mise en oeuvre de manière encore plus efficace si l'aéronef comporte une case de train avant enveloppante (105) décrite dans la demande de brevet française FR2925462 au nom de la demanderesse, permettant de dégager un volume plus important (111) pour la soute avionique

Selon l'art antérieur, figure 4A, les meubles systèmes (130) sont liés de manière isostatique à la structure de l'aéronef à l'intérieur d'un volume délimité par les bielles (3). Ce volume disponible est également amputé d'un passage (140) nécessaire pour assurer l'accès aux meubles systèmes à des fins d'entretien. Les harnais électriques (40) sont passés dans les lumières (21) des traverses plancher (2) s'étendant selon l'axe Y de l'aéronef. Le plancher (31) est pour sa part classiquement fixé sur des rails (30) s'étendant longitudinalement selon l'axe X de l'aéronef, lesdits rails reposant eux-mêmes sur les traverses (2).

Selon un exemple de réalisation de l'invention, figure 4B, les meubles systèmes comprennent des éléments de liaison structurale (1311, 1312, 1313) permettant de drainer les efforts verticaux, selon Z, entre les traverses (2) et la structure de coque du fuselage. Ainsi l'installation de bielles (3) n'est pas nécessaire là où de tels meubles systèmes sont installés. Par ailleurs cette configuration permet de positionner un lien structural (1312) en partie centrale de la traverse (2) et ainsi d'utiliser des traverses de section moindre à rigidité équivalente, la longueur non supportée soumise à la flexion de celles-ci étant réduite. Il est alors possible de dégager un espace plus important pour le passage des harnais électriques (40), par exemple, sous le plancher (31), entre les rails (30).

L'absence de bielle (3) permet de dégager un espace (141) pour accéder aux meubles systèmes et ainsi d'installer des meubles systèmes plus volumineux (131) dans un même volume de soute avionique.

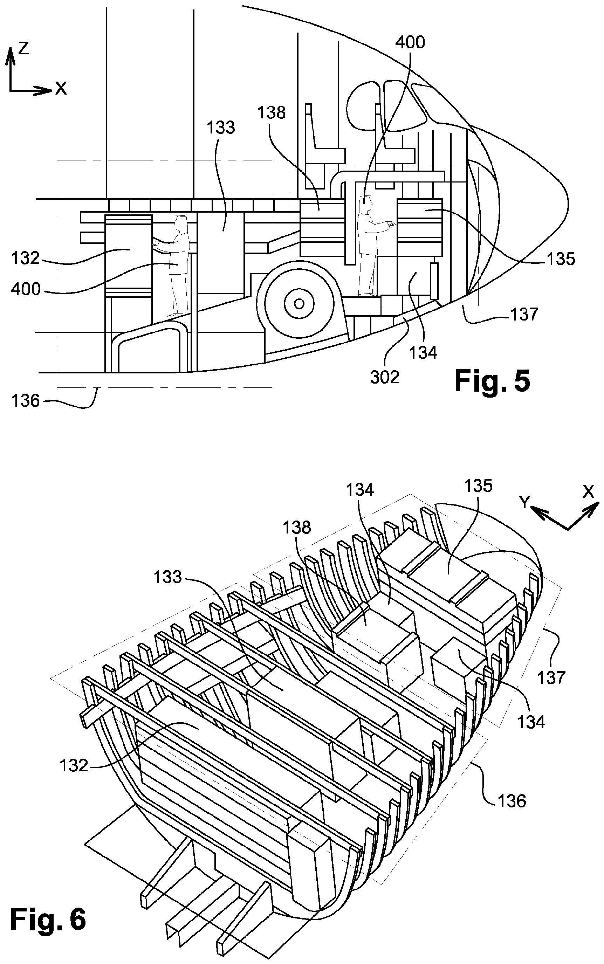

Selon un exemple de réalisation, figures 5 et 6, les meubles systèmes sont disposés transversalement selon l'axe Y du fuselage. Chaque meuble système peut agir comme lien structural pour une ou plusieurs traverses.

Cette disposition permet en outre d'effectuer une ségrégation physique des meubles systèmes selon les axes X et Z de l'aéronef.

Ainsi les coeurs électriques et les calculateurs avioniques sont disposés selon deux groupes. Le premier groupe (136), situé côté soute cargo comprend l'armoire avionique principale (132) ainsi que le coeur électrique principal (133). Le second groupe (137) situé sous le poste de pilotage (101) comprend l'armoire avionique de secours (134) et le coeur électrique de secours (135).

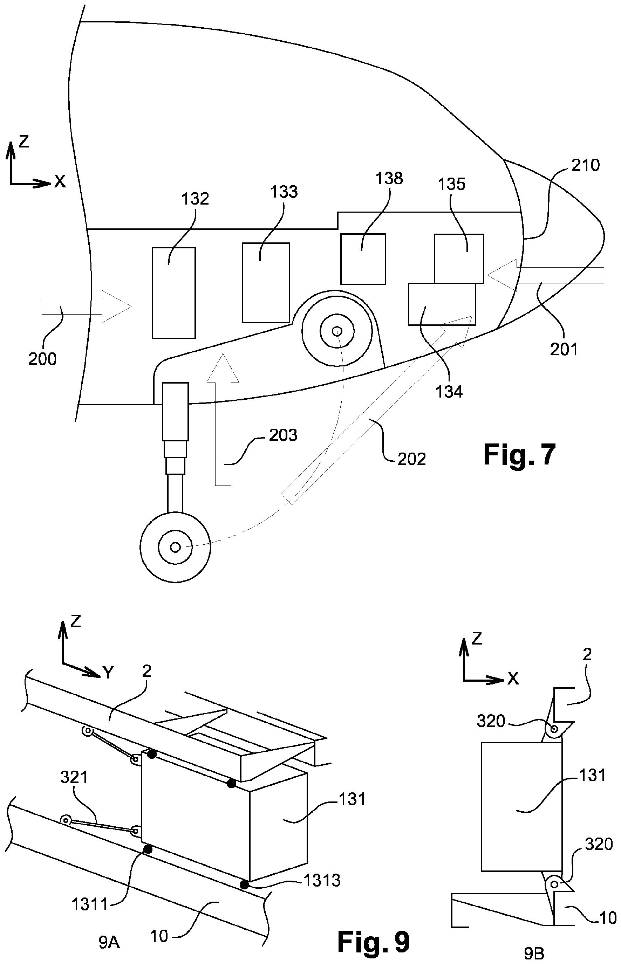

Figure 7, cette ségrégation permet de protéger les systèmes en faisant en sorte qu'un événement tel qu'une explosion en soute (200), l'impact d'un projectile sur le nez (201) ou l'impact des débris liés à l'éclatement d'un pneu (202, 203) ne puissent anéantir la totalité des fonctions vitales de pilotage de l'aéronef.

Ainsi une explosion en soute pourra affecter l'armoire avionique principale (132) et éventuellement le coeur électrique principal (133) mais n'aura qu'une probabilité très faible d'affecter les secours (134, 135). Un projectile impactant au niveau du nez (201) sera d'abord freiné par le bouclier avant (210), puis affectera le coeur électrique de secours (135) et éventuellement l'armoire avionique de secours (134) épargnant les systèmes principaux (132,133). De la même manière en cas d'éclatement d'un pneumatique les débris partent globalement perpendiculairement à la surface de celui-ci (202, 203). Quelle que soit la trajectoire de ces débris, ils ne peuvent affecter que les secours ou que les principaux. Les systèmes optionnels (138) et non indispensables au fonctionnement ou au pilotage de l'aéronef, tels que la baie IFE, peuvent être placés au-dessus de la case de train (104), zone qui reste plus exposée.

En revenant à la figure 5, il apparaît clairement que la disposition transversale des meubles systèmes, espacés d'un pas de traverse, permet de conserver un accès d'homme (400) pour des opérations de maintenance. Cet accès est possible par la soute cargo (103) en ce qui concerne le premier groupe (136) de meubles systèmes, et par l'extérieur de l'aéronef, au moyen d'une trappe (302) située devant la case de train, pour le second groupe (137) de meubles systèmes.

Figure 9, selon un exemple de réalisation le meuble système (131) est fixé dans la structure de l'aéronef sur au moins un cadre (10) d'une part, et d'autre part sur au moins une traverse (2) par des ferrures (320) et par des bielles (321). Les ferrures (320) constituent des appuis reprenant les efforts verticaux, selon Z, appliqués aux traverses. Les bielles (321) reprennent les efforts transversaux, selon Y. Elles stabilisent ainsi le meuble système vis-à-vis des accélérations transversales.

Une fois installé, ledit meuble système, dont la structure est dimensionnée pour transmettre les efforts, bloque les déplacements verticaux de la structure environnante et permet de s'affranchir des bielles structurales (3) de l'art antérieur. Cependant, s'agissant d'un meuble système, celui-ci doit pouvoir être monté et démonté sans trop de difficulté. À cette fin, le meuble est lié notamment par un ensemble de ferrures (320) permettant un montage apte à compenser les tolérances de positionnement des traverses et des cadres dans la structure.

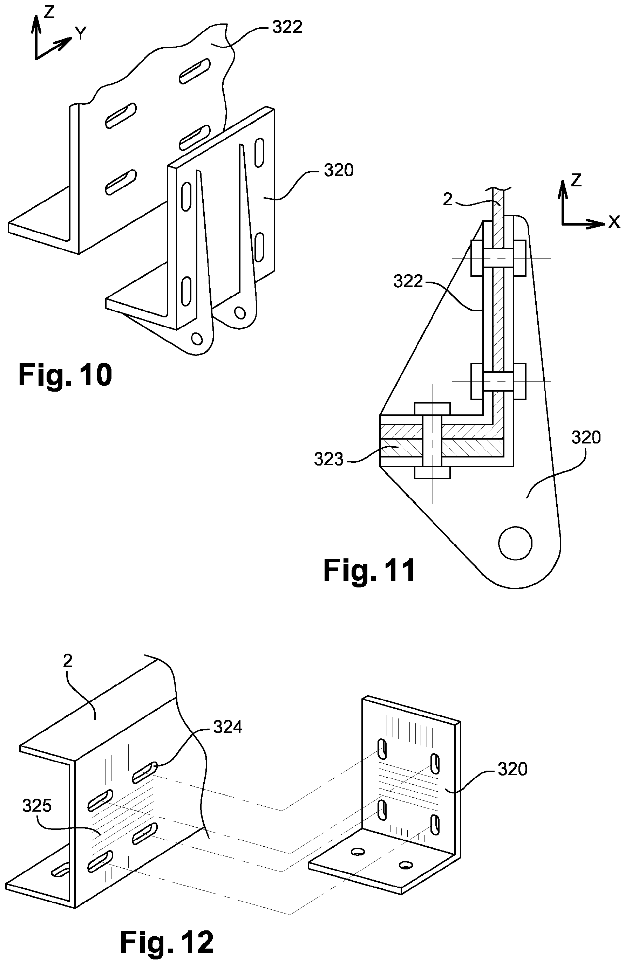

Figure 10, selon un exemple de réalisation avantageux, les ferrures (320) sont fixées aux traverses (2) ou aux cadres (10) par l'intermédiaire d'une contre plaque (322).

Figure 11, selon cet exemple de réalisation, la traverse (2) est prise en étau entre la ferrure (320) et la contre-plaque (322). Pour assurer la tenue mécanique de la liaison une cale de compensation d'épaisseur (323) ajustée au montage est insérée entre la contre-plaque (322) et la traverse (2).

Figure 12, l'ajustement de la position en Y et en Z de la ferrure sur la traverse et obtenu par des lumières oblongues (324) et des stries de profil complémentaires pratiquées sur la traverse (2) et sur la face venant en vis-à-vis de ladite traverse sur la ferrure (320).

La description ci-avant illustre clairement que par ses différentes caractéristiques et leurs avantages, la présente invention atteint les objectifs qu'elle visait. En particulier, elle permet d'utiliser le volume autour de la case de train en pointe-avant d'un aéronef pour y installer des meubles systèmes et ainsi réduire la traînée aérodynamique dudit aéronef.

## Revendications

1. Aéronef comprenant un fuselage formant une structure de coque comprenant une peau (11), des raidisseurs circonférentiels dits cadres (10), disposés à intervalles réguliers selon l'axe longitudinal (X) du fuselage et des traverses (2) disposées transversalement et espacée d'un pas selon l'axe longitudinal dudit fuselage, lesdites traverses portant un plancher, ledit aéronef comprenant au moins deux meubles systèmes (131, 132, 133, 134, 135, 138) configurés pour recevoir des composants, notamment électroniques et électriques, pour le fonctionnement et le pilotage dudit aéronef, chaque meuble comprenant une structure mécanique (1311, 1312, 1313) fixée dans la structure de l'aéronef sur au moins un cadre (10) d'une part, **caractérisé en ce que** ladite structure mécanique est fixée dans la structure de l'aéronef, d'autre part, sur au moins une traverse (2) par des ferrures (320), ladite structure mécanique étant configurée pour s'opposer aux déplacements relatifs des éléments de structure (10, 2) sur lesquels elle est fixée.

2. Aéronef selon la revendication 1, **caractérisé en ce que** ledit meuble comprend au moins 2 liens structuraux (1311, 1313) configurés pour drainer les efforts verticaux, selon un axe Z, entre les traverses (2) et la structure de coque (10, 11).

3. Aéronef selon la revendication 2, **caractérisé en ce que** la largeur dudit meuble est un multiple du pas longitudinal de répartition des traverses (2).

4. Aéronef selon la revendication 3, **caractérisé en ce que** la liaison de la ferrure (320) et de la traverse (2) est réalisée par l'intermédiaire d'une contre plaque (322) prenant appui sur la face opposée de la face d'appui de la ferrure sur la traverse, une cale (323) d'épaisseur ajustable étant insérée entre ladite contre-plaque (322) et la traverse.

5. Aéronef selon la revendication 1, caractérisé en ce la structure dudit meuble comprend des bielles (321) aptes à drainer des efforts selon la direction transversale (Y) entre le meuble et les traverses (2).

6. Aéronef selon le revendication 5, comprenant une pointe avant comportant des traverses (2) réparties selon un pas longitudinal et une soute avionique (111) dans ladite pointe avant, **caractérisé en ce que** deux meubles se succèdent longitudinalement d'une distance longitudinale au moins égale à la distance comprise entre deux traverses successives et **en ce que** chaque meuble est connecté par un harnais (40) de connexion dudit meuble selon un cheminement déterminé dans ladite soute avionique.:

7. Aéronef selon la revendication 6, caractérisé en ce, les meubles (131, 132, 133, 134, 135, 138) sont installés transversalement et distants d'un pas longitudinal de répartition des traverses (2).

8. Aéronef selon la revendication 6 caractérisé en ce les meubles sont distribués selon l'axe longitudinal de l'aéronef (X) selon un premier groupe (136) comprenant les meubles principaux (132, 133) et un second groupe (137) comprenant les meubles de secours (134, 135).

9. Aéronef selon la revendication 8 **caractérisé en ce que** le groupe de meubles (137) de secours est installé sous le poste de pilotage de l'aéronef.

10. Aéronef selon la revendication 9, comprenant un train d'atterrissage avant rétractable dans une case de train (104) placée dans la pointe-avant **caractérisé en ce qu'**il comprend au moins un meuble (138, 300, 132, 133, 134) à proximité immédiate de ladite case de train.

11. Aéronef selon la revendication 10, **caractérisé en ce qu'**au moins un des meubles (300) se trouve à proximité immédiate de la case de train (104) en zone non pressurisée.

## Patentansprüche

1. Flugzeug, umfassend einen Rumpf, der eine Schalenstruktur bildet, umfassend eine Außenschicht (11), umlaufende Versteifungen, Rahmen (10) genannt, die in regelmäßigen Abständen entlang der Längsachse (X) des Rumpfes angeordnet sind, und Querträger (2), die in Querrichtung und in einem Abstand entlang der Längsachse des Rumpfes angeordnet sind, wobei die Querträger einen Boden tragen, wobei das Flugzeug mindestens zwei Systemmöbel (131, 132, 133, 134, 135, 138) umfasst, die ausgelegt sind, Komponenten, insbesondere elektronische und elektrische für die Funktion und die Steuerung des Flugzeugs, aufzunehmen, wobei jedes Möbel eine mechanische Struktur (1311, 1312, 1313) umfasst, die einerseits in der Struktur des Flugzeugs auf mindestens einem Rahmen (10) befestigt ist, **dadurch gekennzeichnet, dass** die mechanische Struktur in der Struktur des Flugzeugs andererseits auf mindestens einem Querträger (2) durch Beschläge (320) befestigt ist, wobei die mechanische Struktur ausgelegt ist, den relativen Verschiebungen der Strukturelemente (10, 2), auf denen sie befestigt ist, entgegenzuwirken.

2. Flugzeug nach Anspruch 1, **dadurch gekennzeichnet, dass** das Möbel mindestens 2 strukturelle Verbindungen (1311, 1313) umfasst, die ausgelegt sind, die vertikalen Kräfte entlang einer Z-Achse zwischen den Querträgern (2) und der Schalenstruktur (1 0, 11) zu drainieren.

3. Flugzeug nach Anspruch 2, **dadurch gekennzeichnet, dass** die Breite des Möbels ein Mehrfaches des Längsaufteilungsabstands der Querträger (2) ist.

4. Flugzeug nach Anspruch 3, **dadurch gekennzeichnet, dass** die Verbindung des Beschlags (320) und des Querträgers (2) mittels einer Gegenplatte (322) ausgebildet ist, die auf der gegenüberliegenden Fläche der Anlagefläche des Beschlags auf dem Querträger zur Anlage kommt, wobei ein Distanzstück (323) einstellbarer Breite zwischen die Gegenplatte (322) und den Querträger eingeführt ist.

5. Flugzeug nach Anspruch 1, **dadurch gekennzeichnet, dass** die Struktur des Möbels Verbindungsstangen (321) umfasst, die in der Lage sind, Kräfte entlang der Querrichtung (Y) zwischen dem Möbel und den Querträgern (2) zu drainieren.

6. Flugzeug nach Anspruch 5, umfassend einen Bugbereich, der Querträger (2) aufweist, die gemäß einem Längsabstand aufgeteilt sind, und einen Avionikraum (111) in dem Bugbereich, **dadurch gekennzeichnet, dass** zwei Möbel in Längsrichtung in einem Längsabstand aufeinander folgen, der mindestens gleich dem Abstand zwischen zwei aufeinanderfolgenden Querträgern ist, und dadurch, dass jedes Möbel durch eine Verbindungseinrichtung (40) des Möbels entlang einem bestimmten Pfad in dem Avionikraum verbunden ist.

7. Flugzeug nach Anspruch 6, **dadurch gekennzeichnet, dass** die Möbel (131, 132, 133, 134, 135, 138) in Querrichtung und um einen Längsaufteilungsabstand der Querträger (2) beabstandet installiert sind.

8. Flugzeug nach Anspruch 6, **dadurch gekennzeichnet, dass** die Möbel gemäß einer ersten Gruppe (136), umfassend die Hauptmöbel (132, 133), und einer zweiten Gruppe (137), umfassend die Reservemöbel (134, 135), entlang der Längsachse des Flugzeugs (X) verteilt sind.

9. Flugzeug nach Anspruch 8, **dadurch gekennzeichnet, dass** die Reservemöbelgruppe (137) unter der Pilotenkanzel des Flugzeugs installiert ist.

10. Flugzeug nach Anspruch 9, umfassend ein Bugfahrwerk, das in einen Fahrwerksschacht (104) einziehbar ist, der im Bugbereich angeordnet ist, **dadurch gekennzeichnet, dass** es mindestens ein Möbel (138, 300, 132, 133, 134) in unmittelbarer Nähe des Fahrwerksschachts umfasst.

11. Flugzeug nach Anspruch 10, **dadurch gekennzeichnet, dass** mindestens eins der Möbel (300) in unmittelbarer Nähe des Fahrwerksschachts (104) im nicht unter Druck stehenden Bereich befindlich ist.

## Claims

1. Aircraft comprising a fuselage forming a hull structure comprising a skin (11), circumferential stiffeners which are referred to as frames (10) and are arranged at regular intervals along the longitudinal axis (X) of the fuselage, and transverse cross-members (2) spaced apart by a pitch in the longitudinal axis of said fuselage, said cross-members supporting a floor, said aircraft comprising at least two systems cabinets (131, 132, 133, 134, 135, 138) that are configured to receive components, in particular electronic and electrical components, for the operation and piloting of said aircraft, each cabinet comprising a mechanical structure (1311, 1312, 1313) that is attached in the structure of the aircraft to at least one frame (10) on one hand, **characterized in that** said mechanical structure is attached in the structure of the aircraft, on the other hand, to at least one cross-member (2) by means of brackets (320), said mechanical structure being configured to oppose relative movements between the structural elements (10, 2) to which it is attached.

2. Aircraft according to Claim 1, **characterized in that** said cabinet comprises at least 2 structural links (1311, 1313) that are configured to take up the vertical forces, along an axis Z, between the cross-members (2) and the hull structure (10, 11).

3. Aircraft according to Claim 2, **characterized in that** the width of said cabinet is a multiple of the longitudinal distribution pitch of the cross-members (2).

4. Aircraft according to Claim 3, **characterized in that** the connection between the bracket (320) and the cross-member (2) is created by means of a counter-plate (322) that bears on the opposing face of the bearing face of the bracket on the cross-member, an adjustable-thickness shim (323) being inserted between said counter-plate (322) and the cross-member.

5. Aircraft according to Claim 1, **characterized in that** the structure of said cabinet comprises rods (321) designed to take up forces in the transverse (Y) direction between the cabinet and the cross-members (2).

6. Aircraft according to Claim 5, comprising a nose comprising cross-members (2) distributed with a longitudinal pitch and an avionics bay (111) in said nose, **characterized in that** two cabinets are in longitudinal succession by a longitudinal distance at least equal to the distance between two successive cross-members, and **in that** each cabinet is connected by a connection harness (40) of said cabinet along a certain pathway in said avionics bay.

7. Aircraft according to Claim 6, **characterized in that** the cabinets (131, 132, 133, 134, 135, 138) are installed transversely and separated by a longitudinal pitch of distribution of the cross-members (2).

8. Aircraft according to Claim 6, **characterized in that** the cabinets are distributed along the longitudinal axis of the aircraft (X), in a first group (136) comprising primary cabinets (132, 133) and a second group (137) comprising auxiliary cabinets (134, 135).

9. Aircraft according to Claim 8, **characterized in that** the auxiliary cabinet group (137) is installed below the cockpit of the aircraft.

10. Aircraft according to Claim 9, comprising forward landing gear that can be retracted into a landing gear bay (104) located in the nose, **characterized in that** it comprises at least one cabinet (138, 300, 132, 133, 134) in immediate proximity to said landing gear bay.

11. Aircraft according to Claim 10, **characterized in that** at least one of the cabinets (300) is located in immediate proximity to the landing gear bay (104), in a non-pressurized zone.
